# EUROPÄISCHE PATENTSCHRIFT

(11) **EP 1 696 370 B1**
(45) Veröffentlichungstag und Bekanntmachung des Hinweises auf die Patenterteilung: **28.07.2010**
(21) Anmeldenummer: 06011916.1
(22) Anmeldetag: 12.09.2002
(51) Int. Cl.: G06K 19/077, G06K 7/00, B31B 3/00, B65B 19/02, B65D 85/00

(54) **Verfahren zur Identifizierung insbesondere von Zigarettenpackungen**
Method for the identification in particular of cigarette packages
Procédé destiné à l'identification d'emballages de cigarettes en particulier

(30) Priorität: 14.09.2001 DE 10145413
(43) Veröffentlichungstag der Anmeldung: 30.08.2006
(62) Teilanmeldung aus: 02779340.5
(73) Patentinhaber: Focke & Co. (GmbH & Co. KG), 27283 Verden (DE)
(72) Erfinder: Focke, Heinz, 27283 Verden (DE); Tobias, Jacobi, 21423 Winsen/Luhe (DE); Engel, Gisbert, 27308 Luttum (DE)
(74) Vertreter: Bolte, Erich

(56) Entgegenhaltungen:
- EP-A1- 0 882 411
- EP-A1- 0 967 161
- WO-A-00/46734
- WO-A1-01/53171
- DE-A- 4 213 489
- DE-A- 4 341 880
- DE-A- 19 911 709
- DE-A1- 19 706 215
- DE-A1- 19 900 086
- DE-A1- 19 915 911
- DE-U- 9 417 952
- US-A- 6 027 027

## Beschreibung

Die Erfindung betrifft ein Verfahren zum Überprüfen des Inhalts von Großbehältern für Zigaretten, nämlich Kartons für Versandzwecke, mit einer Vielzahl von Gebindepackungen als Inhalt, wobei jede Gebindepackung eine Gruppe von Zigarettenpackungen aufweist, die von einer Außenumhüllung umgeben ist.

Der Einsatz von Transpondern für die Speicherung von Daten ist in der Verpackungstechnik bekannt, und zwar auch hinsichtlich der Anwendung bzw. Anbringung von Transpondern an Zigarettenpackungen (WO 00/46734). Bei diesem Stand der Technik sollen auf den Transpondern (oder anderen Datenträgern) vorrangig steuerrechtlich relevante Daten gespeichert werden. Allerdings kann der Transponder auch anderen Daten über die Herstellung der Zigaretten aufnehmen. Der Datenträger ist dabei an der Außenseite der Zigarettenpackung angebracht.

Die DE 199 15 911 beschreibt ein Herstellverfahren, bei dem aus einem mehrschichtigen Zuschnitt einer (Endlos-) Materialbahn einzelne Zigarettenpackungen gefertigt werden. Auf der Stirnwand der Packung ist eine Steuerbanderole aus Papier angebracht.

Ähnliche Zigarettenpackungen offenbart auch die DE 198 37 469.

Die Idee, einen Transponder zwischen zwei Schichten unterzubringen, ist aus der US 6,027,027 bekannt. Dort wird ein beschreibbarer RFID-Transponder zwischen zwei Papierschichten auf einem Endlosband eingebettet.

Die DE 199 00 086 offenbart flexible RFID-Transponder auf einem Endlosband (Laminatbahn).

Die Idee, RFID-Transponder zum Nachweis von Plagiaten/Fälschungen innerhalb von Kleidungsstücken anzubringen, ist aus DE-U-94 17 952 und DE-A-43 41 880 bekannt. In der DE 199 11 709 wird der Transponder unauffällig auf der Innenseite einer Produktverpackung untergebracht.

Eine Einrichtung zum Herstellen und Verpacken von Zigaretten ist aus der EP 882 411 bekannt, gegen die die Ansprüche abgegrenzt sind.

Der Erfindung liegt die Aufgabe zugrunde, die Kennzeichnung von Zigarettenpackungen zur Aufnahme einer Vielzahl von Daten, insbesondere auch zur Vermeidung von Nachahmungen und illegalen Vertriebswegen zu ermöglichen.

Zur Lösung dieser Aufgabe

dient erfindungsgemäß das in Anspruch 1 definierte Verfahren.
Bestimmte Ausführungsbeispiele sind in den abhängigen Ansprüchen definiert.

Bei dem Verfahren der Erfindung erfolgt die Erfassung der Packungen mittels Transponder am Ende des Handhabungsprozesses, nämlich nach dem Einführen von Gebindepackungen (Zigarettenstangen) in Versandkartons. Transponder mit den zu erfassenden Daten befinden sich an der Innenseite einer Außenumhüllung einer jeden Zigaretten-Gebindepackung, also üblicherweise einer Einheit mit zehn Zigarettenpackungen. Die Gesamtheit der Transponder in einem Versandkarton - entsprechend der Anzahl der Gebindepackungen - wird durch ein Lesegerät erfasst und ausgewertet.

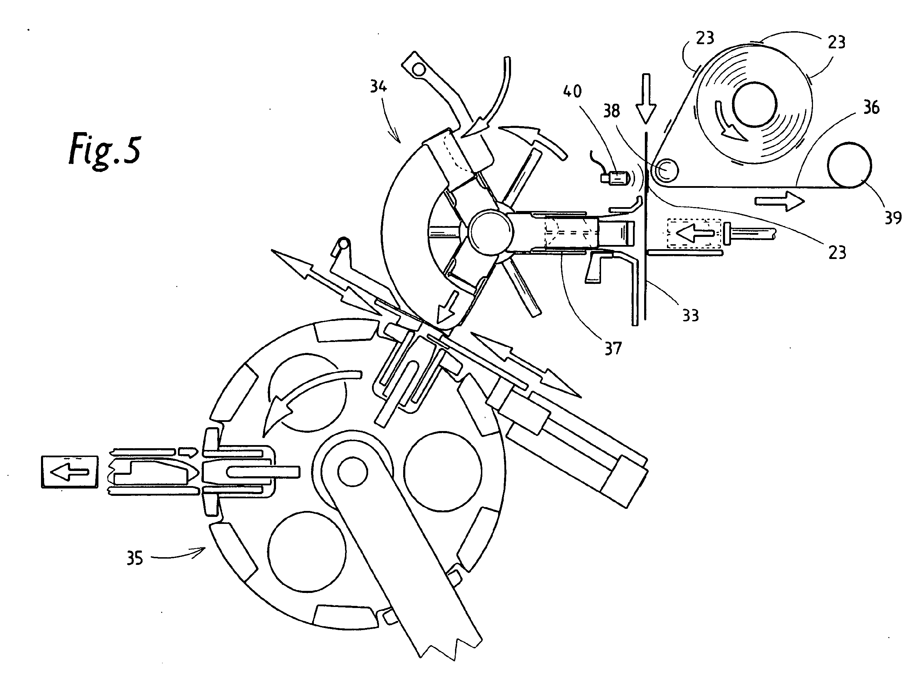

Weitere Einzelheiten und Merkmale der Erfindung werden nachfolgend anhand der Zeichnungen näher erläutert, wobei Einzelheiten der Erfindung in Fig. 5, Fig. 6 und Fig. 8 dargestellt sind, während die übrigen Zeichnungen das technische Umfeld zeigen.

In den Zeichnungen sind wichtige Einsatz- bzw. Anwendungsbeispiele für Transponder gezeigt, also für auf der Grundlage der Radiofrequenztechnik arbeitende Datenträger. Die Transponder können unterschiedliche Gestalt und Größe aufweisen, beispielsweise etiketten-, blatt- oder scheibenförmig, aber auch zylindrisch, stabförmig ausgebildet sein. Auf den Transpondern sind Informationen und Daten aller Art speicherbar, und zwar durch Übertragung mit einem elektronischen Schreibgerät. Die Daten können durch entsprechend ausgebildete Lesegeräte abgefragt werden.

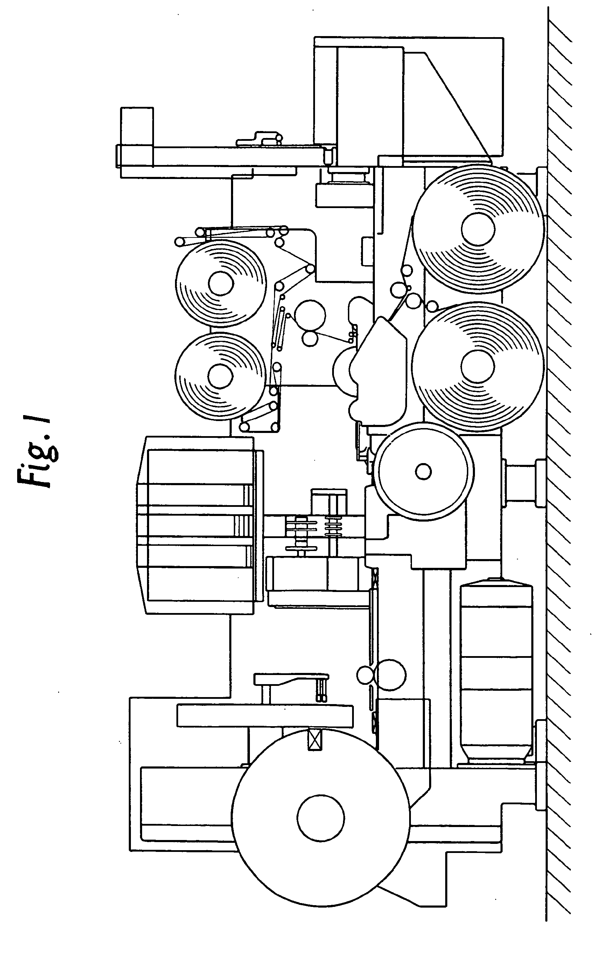

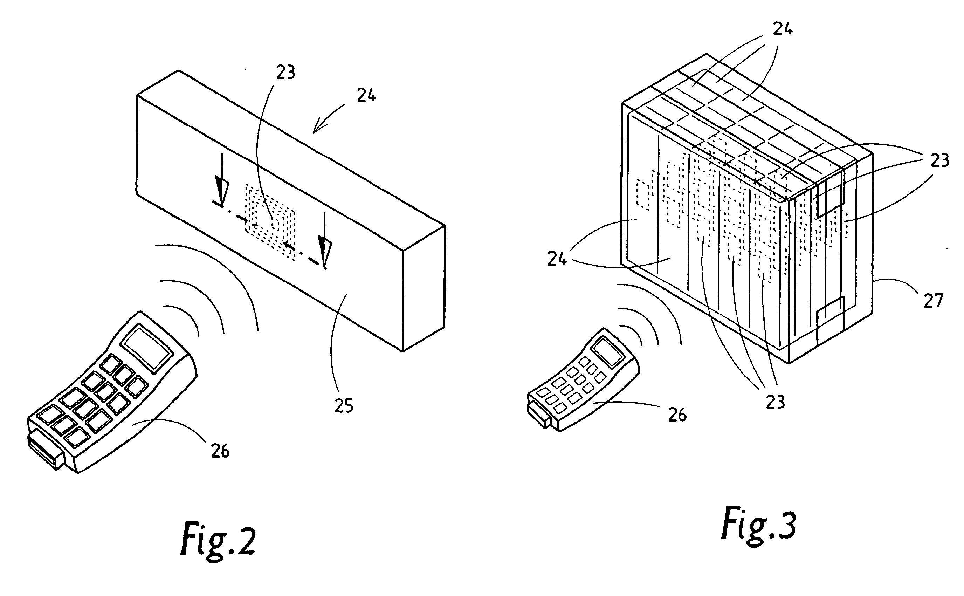

Fig. 2 und Fig. 3 zeigen besondere Anwendungen von Transpondern 23 im Zusammenhang mit Zigarettenpackungen. Der Transponder ist an einer Gebindepackung 24 für eine Gruppe von (zehn) Zigarettenpackungen angebracht - Zigarettenstange. Die Gebindepackung 24 weist eine Außenumhüllung auf, an der der Transponder 23 innenseitig angebracht ist, und zwar im Bereich einer großflächigen Packungswand 25. Der Transponder 23 enthält insbesondere Daten über die Fertigung der Zigaretten bzw. deren Verpackung. Mit einem Lesegerät 26 können diese Daten zu Kontrollzwecken erkannt werden.

Eine Vielzahl derartiger Gebindepackungen 24 wird zu Versandzwecken in einen Großbehälter eingefüllt, nämlich in einem Karton 27. Mit Hilfe des Lesegeräts 26 kann die komplette Füllung des Kartons 27 mit Gebindepackungen 24 überprüft werden. Auch ist es möglich, durch Abtasten aller Transponder 23 der Gebindepackungen 24 im Karton 27 zu kontrollieren, dass der Karton 27 sortenrein befüllt ist.

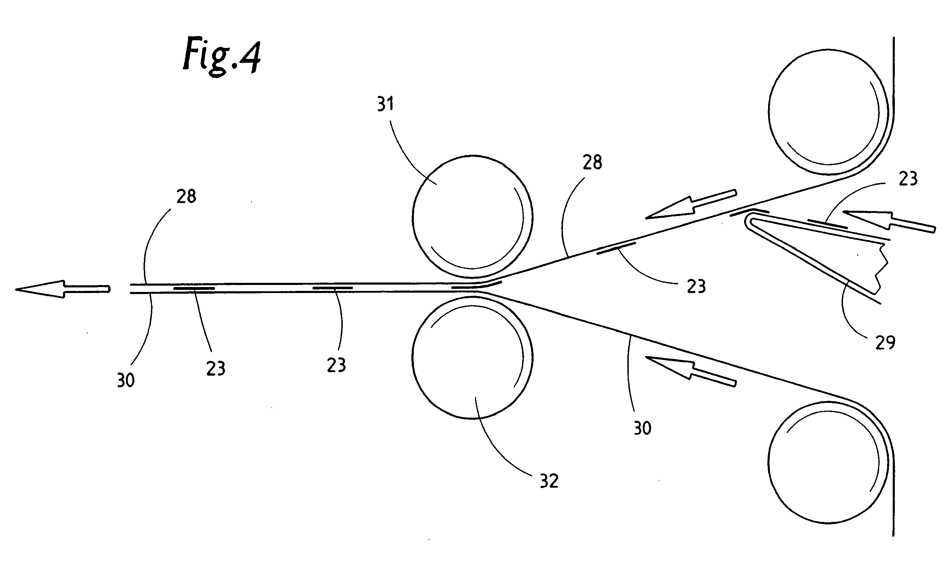

Für die industrielle Fertigung von Packungen mit einem Transponder 23 wird gemäß Fig. 4 so vorgegangen, dass die Transponder 23 einer fortlaufenden Materialbahn 28 zugeführt und an dieser positionsgenau angebracht werden. Die Transponder 23 sind so positioniert, dass beim nachfolgenden Abtrennen von Zuschnitten für jeweils eine Packung die Transponder an dem Zuschnitt entsprechend der gewünschten Positionierung angebracht sind, zum Beispiel bei der Fertigung von Gebindepackungen 24 gemäß Fig. 2. Die Transponder 23 werden durch einen gesonderten Förderer 29 zugeführt und an der Materialbahn 28 zum Beispiel durch Klebung angebracht.

Eine weitere Besonderheit der Fig. 4 besteht darin, dass die Transponder 23 zwischen der Materialbahn 28 und einer weiteren Materialbahn 30 liegen, also zwischen diesen Bahnen 28, 30 eingebettet sind. Die beiden Materialbahnen 28, 30 werden durch entsprechend angeordnete Umlenkrollen konvergierend bzw. trichterförmig geführt. Die Transponder 23 werden an der noch einzeln geführten Materialbahn 28 angebracht. Danach findet zwischen Andrückrollen 31, 32 eine Vereinigung der Materialbahnen 28, 30 statt unter Verbindung derselben miteinander und Einbetten der Transponder 23. Die so gebildete mehrlagige Materialbahn wird einem Zuschnittaggregat zugeführt zum Abtrennen von Zuschnitten für Packungen, derart, dass jeder Zuschnitt mindestens einen Transponder 23 in der erwünschten Position aufweist.

Fig. 5 zeigt eine andere Besonderheit des Einsatzes von Transpondern 23. Diese werden bei der Fertigung von Packungen, und zwar insbesondere von Gebindepackungen 24 für Zigaretten, unmittelbar im Zusammenhang mit der Anbringung der Außenumhüllung an einem Zuschnitt 33 für die Außenumhüllung angebracht. Die Fertigung der Gebindepackung 24 wird hier anhand eines Gebindepackers schematisch dargestellt, der zwei Faltrevolver 34, 35 aufweist. Die aus dem zweiten Faltrevolver 35 austretende Gebindepackung 24 weist in diesem Falle an der Oberseite bzw. der oberen Packungswand 25 innenseitig den Transponder 23 auf.

Für die Zuführung bzw. Bereitstellung der Transponder 23 sind diese an einer Trägerbahn 36 angebracht. Die Transponder 23 weisen dabei einen Abstand voneinander auf, der fertigungstechnisch gewährleistet, dass die Transponder 23 dem an der Eintrittsseite des Faltrevolvers 34 bereitgehaltenen Zuschnitt 33 zugeführt werden können. Die - von einer Materialbahn abgetrennten - Zuschnitte 33 werden jeweils in einer aufrechten Ebene vor einer Tasche 37 des Faltrevolvers 34 positioniert. Der Vorgang des Einhüllens einer Zigarettengruppe geht dabei in üblicher Weise vonstatten, nämlich mit einer zunächst U-förmigen Umhüllung der Packungsgruppe durch Einschieben derselben in die Tasche 37 unter Mitnahme des Zuschnitts 33. Dabei gelangt der Transponder 23 mit dem entsprechenden Teil des Zuschnitts 33 an die Oberseite der Packungsgruppe.

Die Trägerbahn 36 mit den Transpondern 23 ist gesondert vorbereitet. Die Transponder 23 sind durch Klebung lösbar an der Trägerbahn 36 fixiert. Im Bereich einer Umlenkung, nämlich im Bereich einer Umlenkrolle 38 mit geringem Durchmesser, erfolgt die Übergabe des Transponders 23 an den Zuschnitt 33, und zwar unter Andrücken an diesen bei gleichzeitigem Lösen von der Trägerbahn 36. Die Trägerbahn wird im Anschluss an die Umlenkrolle 38 einer Wickelrolle 39 zugeführt, die das Trägerband 36 zur erneuten Verwendung aufnimmt.

Bei dem gezeigten Beispiel ist im Bereich des ungefalteten Zuschnitts 33, nämlich gegenüber zur Umlenkrolle 38, ein Schreibgerät 40 angebracht, also ein elektronisches Gerät zur Übertragung der jeweiligen Daten auf den Transponder 23. Die Daten zur Identifizierung des Packungsinhalts werden demnach unmittelbar vor Beginn des Faltprozesses aufgebracht.

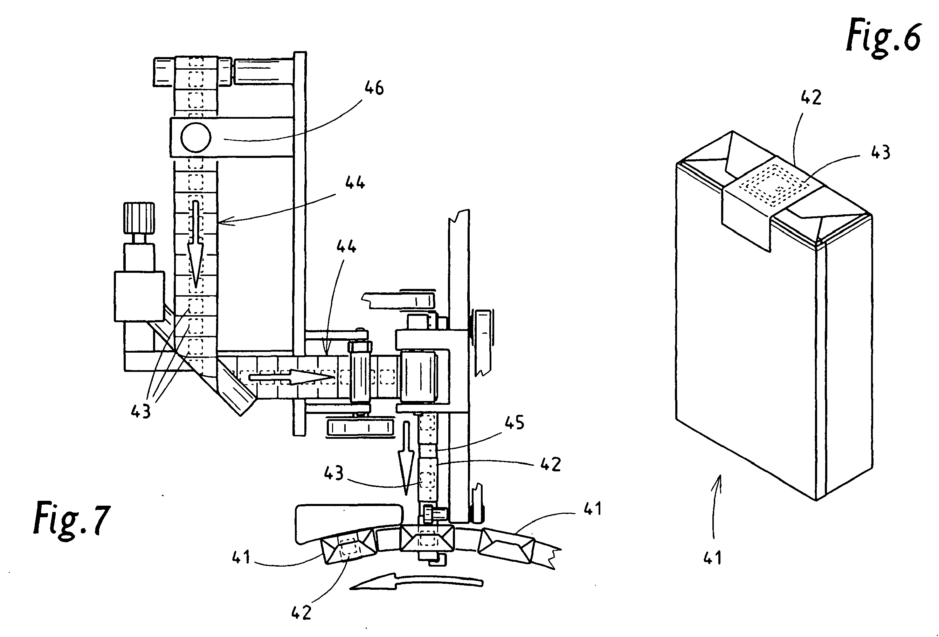

Fig. 6 und Fig. 7 befassen sich mit der Ausgestaltung und Fertigung einer besonderen Zigarettenpackung 41, nämlich einer Weichbecherpackung. Diese ist so gestaltet, dass quer über eine obere Stirnfläche der Packung eine U-förmige Banderole 42 angeordnet ist. Diese dient als Verschlussmittel der Zigarettenpackung, aber vorrangig auch als Steuerbanderole. Die Besonderheit besteht darin, dass an der Banderole 42 vorzugsweise innenseitig ein Transponder 43 angebracht ist. Dieser kann sowohl die ggf. vorgeschriebenen fiskalischen Daten enthalten, aber auch Daten über Fertigung der Zigaretten bzw. der Packung.

Fig. 7 zeigt einen Banderolenapparat, der im Wesentlichen gemäß DE 196 47 670 (bzw. US 5 972 153) ausgebildet ist. Die Banderolen 42 werden hier von einer entsprechenden vorbedruckten Bahn 44 abgetrennt und durch ein Saugband 45 den durch einen Faltrevolver transportierten Zigarettenpackungen 41 zugeführt. Die Bahn 44 ist vorbereitet für die Fertigung der Banderolen 42 durch einen quergerichteten Trennschnitt. Zu diesem Zweck sind auf der einen Seite der Bahn 44 Felder aufgedruckt zur Bildung der Banderolen 42. Jedem dieser Felder ist auf der Rückseite der Bahn 44 ein Transponder 43 zugeordnet. Die der Zigarettenpackung 41 zugeführten Banderolen 42 weisen demnach bereits den Transponder 43 auf der Innenseite der Banderole 42 auf.

Die Transponder 43 werden zweckmäßigerweise aktiviert, also mit den erforderlichen Daten versehen, bevor die Banderolen 42 an der Zigarettenpackung 41 angebracht werden. Bei dem vorliegenden Beispiel ist im Bereich der Bahn 44 ein elektronisches Schreibgerät 46 angebracht, welches die jeweils erforderlichen Daten auf die Transponder 43 überträgt, während die Bahn 44 an dem Schreibgerät 46 vorbeibewegt wird. Alternativ kann vorgesehen sein, dass die Daten auf den Transponder 43 übertragen werden, wenn sich die Banderole 42 bereits an der Packung befindet. Die hier beschriebene Besonderheit ist in analoger Weise auch anwendbar, wenn die Banderolen einzeln vorbereitet und stapelweise zur Verfügung gestellt bzw. einem der Verpackungsmaschine zugeordneten Banderolenmagazin entnommen werden.

### Bezugszeichenliste:

- 10: Zuschnitt-Magazin
- 11: Abroller
- 12: Zuschnittbahn
- 13: Rundungswalze
- 14: Transponder
- 15: Lesegerät
- 16: Faltrevolver
- 17: Träger
- 18: Tasche
- 19: Wellenzapfen
- 20: Transponder
- 21: Ausnehmung
- 22: Tragkörper
- 23: Transponder
- 24: Gebindepackung
- 25: Packungswand
- 26: Lesegerät
- 27: Karton
- 28: Materialbahn
- 29: Förderer
- 30: Materialbahn
- 31: Andrückrolle
- 32: Andrückrolle
- 33: Zuschnitt
- 34: Faltrevolver
- 35: Faltrevolver
- 36: Trägerbahn
- 37: Tasche
- 38: Umlenkrolle
- 39: Wickelrolle
- 40: Schreibgerät
- 41: Zigarettenpackung
- 42: Banderole
- 43: Transponder
- 44: Bahn
- 45: Saugband
- 46: Schreibgerät

## Patentansprüche

1. Verfahren zum Überprüfen des Inhalts von Großbehältern für Zigaretten, nämlich Kartons (27) für Versandzwecke, mit einer Vielzahl von Gebindepackungen (24) als Inhalt,
wobei jede Gebindepackung (24) eine Gruppe von Zigarettenpackungen aufweist,
wobei die Gebindepackung (24) von einer Außenumhüllung umgeben ist,
**gekennzeichnet durch** folgende Merkmale:
a) an jeder Gebindepackung (24) befindet sich ein Transponder (23) mit Informationen und Daten über die Zigarettenpackungen,
b) der Transponder (23) ist jeweils an der Innenseite der Außenumhüllung der Gebindepackung (24) angebracht,
c) der Transponder (23) wird an einem Zuschnitt (33) für die Außenumhüllung angebracht und der Zuschnitt (33) sodann um die Gruppe der Zigarettenpackungen herumgefaltet,
d) die auf dem Transponder (23) zu speichernden Daten werden unmittelbar vor Beginn des Faltprozesses zur Umhüllung der Gruppe der Zigarettenpackungen mittels Schreibgerät (40) auf den Transponder (23) übertragen,
e) nach Fertigstellung der Gebindepackung (24) und Einführen in den Karton (27) werden die Daten aller Transponder (23) der Gebindepackungen (24) in dem Karton (27) **durch** ein Lesegerät (26) erfasst und ausgewertet.

2. Verfahren nach Anspruch 1, **gekennzeichnet durch** folgende Merkmale:
a) Transponder (23) werden entsprechend der Position in einer Gebindepackung (24) einer Materialbahn (28) zum Herstellen von Zuschnitten (33) für Gebindepackungen (24) zugeführt und an der Materialbahn (28) angebracht,
b) nachfolgend werden Zuschnitte (33) für jeweils eine Gebindepackung (24) von der Materialbahn (28) abgetrennt,
c) jeweils ein Zuschnitt (33) mit Transponder (23) wird in einer aufrechten Ebene vor einer Tasche (37) eines Faltrevolvers (34) bereitgehalten,
d) eine Gruppe von Zigarettenpackungen erfasst beim Einschieben in die Tasche (37) den Zuschnitt (33) unter U-förmiger Umhüllung der Packungsgruppe, derart, dass der Transponder (23) mit einem entsprechenden Teil des Zuschnitts (23) an die Oberseite der Packungsgruppe gelegt wird.

3. Verfahren nach Anspruch 2, **dadurch gekennzeichnet, dass** die Transponder (23) durch Klebung lösbar an einer Trägerbahn (36) fixiert sind und im Bereich einer Umlenkung der Trägerbahn (36) an den Zuschnitt (33) übertragen werden unter Andrücken an diesen.

## Claims

1. A process for checking the contents of large containers for cigarettes, namely cases (27) for shipping purposes, with a multiplicity of bundle packs (24) as their contents,
with each bundle pack (24) having a group of cigarette packs,
with the bundle pack (24) being surrounded by an outer wrapper,
**characterized by** the following features:
a) located on each bundle pack (24) is a transponder (20) with information and data relating to the cigarette packs,
b) the transponder (23) is attached to the inner side of the outer wrapper of each bundle pack (24),
c) the transponder (23) is attached to a blank (33) for the outer wrapper, with the blank (33) then being folded around the group of cigarette packs,
d) the data to be stored on the transponder (23) are directly transferred to the transponder (23) by means of a write unit (40) prior to the folding process for wrapping the group of cigarette packs,
e) the data of all transponders (23) of the bundle packs (24) in the case (27) are acquired and evaluated by a read unit (26) after the bundle pack (24) is finished and the case (27) has been filled.

2. The process according to Claim 1, **characterized by** the following features:
a) for the purpose of producing blanks (33) for bundle packs (24), transponders (23) are fed to a material web (28) and attached to the material web (28) in accordance with their position in a bundle pack (24),
b) subsequently, blanks (33) for one bundle pack (24) each are severed from the material web (28),
c) in each case, a blank (33) with transponder (23) is held ready in an upright plane in front of a pocket (37) of a folding turret (34),
d) as a group of cigarette packs is inserted into the pocket (37), said group of cigarette packs engages the blank (33) so that the latter surrounds the pack group in a U-shaped manner such that the transponder (23) and the corresponding part of the blank (33) are positioned at the top side of the pack group.

3. The process according to Claim 2, **characterized in that** the transponders (23) are detachably fixed to a carrier web (36) by adhesive means and are transferred to the blank (33) by being pressed against the latter in the region of a deflection of the carrier web (36).

## Revendications

1. Procédé pour vérifier le contenu de grands contenants pour cigarettes, à savoir des cartons (27) destinés à l'expédition, comprenant une pluralité de paquets d'emballage (24) en tant que contenu,
chaque paquet d'emballage (24) présentant un groupe de paquets de cigarettes,
le paquet d'emballage (24) étant enveloppé d'une enveloppe extérieure,
**caractérisé par** les caractéristiques suivantes :
a) sur chaque paquet d'emballage (24) se trouve un transpondeur (23) contenant des informations et des données relatives aux paquets de cigarettes,
b) le transpondeur (23) est monté à chaque fois sur le côté intérieur de l'enveloppe extérieure du paquet d'emballage (24),
c) le transpondeur (23) est monté sur une pièce découpée (33) pour l'enveloppe extérieure et la pièce découpée (33) est alors pliée autour du groupe de paquets de cigarettes,
d) les données à stocker sur le transpondeur (23) sont directement transmises au moyen d'un appareil d'écriture (40) sur le transpondeur (23) avant le commencement de l'opération de pliage pour envelopper le groupe de paquets de cigarettes,
e) après la fabrication du paquet d'emballage (24) et l'insertion dans le carton (27), les données de tous les transpondeurs (23) des paquets d'emballage (24) dans le carton (27) sont détectées et analysées par un appareil de lecture (26).

2. Procédé selon la revendication 1, **caractérisé par** les caractéristiques suivantes :
a) les transpondeurs (23) sont acheminés en fonction de la position dans un paquet d'emballage (24) à une bande de matériau (28) pour produire des pièces découpées (33) pour des paquets d'emballage (24) et sont montés sur la bande de matériau (28),
b) ensuite, des pièces découpées (33) pour chaque paquet d'emballage (24) sont sectionnées de la bande de matériau (28),
c) à chaque fois une pièce découpée (33) avec un transpondeur (23) est maintenue dans un état prêt dans un plan vertical devant une poche (37) d'un revolver de pliage (34),
d) un groupe de paquets de cigarettes saisit, lors de l'insertion dans la poche (37), la pièce découpée (33) avec un enveloppement en forme de U du groupe de paquets, de telle sorte que le transpondeur (23) soit placé avec une partie correspondante de la pièce découpée (23) sur le côté supérieur du groupe de paquets.

3. Procédé selon la revendication 2, **caractérisé en ce que** les transpondeurs (23) sont fixés de manière détachable par collage sur une bande de support (36), et sont transférés dans la région d'un renvoi de la bande de support (36) à la pièce découpée (33) par pression contre celle-ci.
